# FASCICULE DE BREVET EUROPEEN

(11) **EP 3 608 885 B1**
(45) Date de publication et mention de la délivrance du brevet: **19.02.2025**
(21) Numéro de dépôt: 19189817.0
(22) Date de dépôt: 02.08.2019
(51) Int. Cl.: G07G 1/00, G07F 7/08, G06Q 20/34

(54) **STATION D'ACCUEIL POUR TERMINAL DE PAIEMENT ÉLECTRONIQUE, TERMINAL ET SYSTÈME DE PAIEMENT ÉLECTRONIQUE CORRESPONDANTS**
DOCKINGSTATION FÜR ELEKTRONISCHES ZAHLUNGSTERMINAL, ENTSPRECHENDES ELEKTRONISCHES ZAHLUNGSTERMINAL UND -SYSTEM
DOCKING STATION FOR ELECTRONIC PAYMENT TERMINAL, CORRESPONDING TERMINAL AND ELECTRONIC PAYMENT SYSTEM

(30) Priorité: 06.08.2018 FR 1857331
(43) Date de publication de la demande: 12.02.2020
(73) Titulaire: Banks and Acquirers International Holding, 75015 Paris (FR)
(72) Inventeur: ALLIROT, Richard, 38700 CORENC (FR); BALASSE, Johann, 92400 COURBEVOIE (FR); ROUX, Julien, 69300 CALUIRE (FR)
(74) Mandataire: LLR

(56) Documents cités:
- WO-A2-03/046710
- US-A1- 2004 058 705
- US-A1- 2012 033 375
- US-A1- 2016 253 668
- US-A1- 2016 275 478
- US-A1- 2017 051 538
- US-A1- 2017 236 109
- US-B1- 6 700 773

## Description

### 1. Domaine de l'invention

L'invention concerne le domaine des systèmes de paiement et plus précisément le domaine des terminaux de paiement

Plus particulièrement, l'invention se rapporte à une station d'accueil pour terminal de paiement électronique, à un terminal de paiement électronique, et à un système de paiement électronique associé.

### 2. Art antérieur

A l'heure actuelle, les terminaux de paiement électroniques sont majoritairement utilisés pour permettre le règlement des achats de biens et de services au sein des points de vente.

De tels terminaux comprennent généralement un lecteur de carte à puce et un lecteur de carte magnétique. Ils comprennent également un écran, permettant notamment de visualiser les montants des transactions et un clavier de saisie de ces mêmes montants ainsi que des codes confidentiels saisis par les clients, ou bien un écran tactile.

Ces terminaux de paiement possèdent généralement une batterie, leur permettant de fonctionner de manière autonome. Cette batterie doit être régulièrement rechargée, classiquement par l'intermédiaire d'une station d'accueil, autrement appelée socle d'accueil, socle d'alimentation ou base d'alimentation, sur laquelle le terminal de paiement mobile est posé dans une position horizontale, ou proche de l'horizontale, de façon à ce que des contacts du terminal viennent en contact avec des contacts de la station formant une connexion électrique entre les moyens d'alimentation du terminal et les moyens d'alimentation de la station.
Les documents US2016253668 et US2017236109 concernent des stations d'accueils pour terminaux de paiements. Le document US6700773 concerne système informatique modulaire.

La station peut être reliée à un ordinateur par une liaison filaire, par exemple selon la norme USB (de l'anglais "Universal Serial Bus").

Classiquement, une telle station d'accueil présente des moyens de guidage du terminal de paiement vers une position d'alimentation, sous la forme par exemple de montants le long desquels le terminal doit glisser.

Toutefois, actuellement, le maintien du terminal de paiement sur la station d'accueil n'est pas totalement satisfaisant. Un mauvais maintien implique un mauvais contact potentiel ce qui peut faire échouer une transaction.

Par exemple, un mauvais contact sur le connecteur de liaison, par exemple un mauvais contact USB, peut faire échouer une transaction lorsque la table supportant la station d'accueil et le terminal subit des vibrations ou un déplacement, par le fait que des pertes ponctuelles de contact peuvent apparaître. Un tel inconvénient peut s'avérer problématique lors de communications réseau par exemple.

En outre, lorsqu'un nombre important de contacts entre la station d'accueil et le terminal est mis en oeuvre, que ce soient des contacts de charge ou des contacts de type USB, l'effort résultant de la compression des contacts peut être supérieur au poids du terminal et donc empêcher une bonne qualité de contact.

Par ailleurs, un mauvais maintien du terminal de paiement sur la station d'accueil peut gêner la lecture correcte d'une carte à puce du fait que la force d'insertion de la carte dans le terminal peut le faire sortir de son logement sur la station, ou d'une carte à lecture magnétique du fait d'un glissement par à-coups de la carte dans la fente dédiée du terminal ou d'un échappement de la carte lors de son glissement dans ladite fente par exemple.

Enfin, un autre inconvénient des systèmes de paiement actuels est qu'ils s'avèrent être volumineux et donc encombrants pour les utilisateurs.

Ainsi, il existe un besoin de proposer un système de paiement, comprenant une station d'accueil ainsi qu'un terminal de paiement électronique associé, permettant de résoudre au moins en partie certains des inconvénients de l'art antérieur.

### 3. Objectifs de l'invention

Un objectif de la présente invention est de pallier au moins en partie aux inconvénients de l'art antérieur.

Plus précisément, l'invention vise à pallier au moins certains des inconvénients des systèmes de paiement de l'état de la technique.

L'invention vise à fournir, dans au moins un mode de réalisation, une station d'accueil de terminal de paiement électronique permettant d'assurer un maintien suffisant pour maintenir un contact électrique satisfaisant entre la station et le terminal reposant sur cette dernière.

Un autre objectif d'au moins un mode de réalisation est de mettre en oeuvre un tel système de paiement ayant un encombrement limité.

Encore un autre objectif d'au moins un mode de réalisation est de fournir un tel système qui soit simple d'utilisation et peu coûteux à mettre en oeuvre.

### 4. Exposé de l'invention

Ces objectifs, ainsi que d'autres qui apparaitront dans la suite de la présente description, sont atteints à l'aide d'une station d'accueil définie par la revendication 1.

Ainsi, l'invention propose une approche nouvelle et inventive permettant de résoudre au moins en partie certains des inconvénients de l'art antérieur.

Pour ce faire, l'invention prévoit un verrouillage réversible du terminal de paiement sur la station par la mise en oeuvre de moyens de verrouillage mobiles sur la station qui coopèrent ou non avec des moyens de verrouillage complémentaires fixes situés sous le terminal de paiement.

Ces moyens de verrouillage servent à accrocher le terminal sur l'élément support de manière à le positionner correctement et le rendre fixe pour maintenir un contact électrique satisfaisant entre la station et le terminal et assurer un fonctionnement optimal de l'ensemble.

Les moyens de verrouillage mobiles peuvent être escamotés pour détacher le terminal de la station et permettre une utilisation mobile de ce dernier.

Selon un mode de réalisation particulier de l'invention, les premiers moyens de verrouillage mobiles comprennent deux doigts et en ce que les deuxièmes moyens de verrouillage comprennent deux logements dans lesquelles viennent se loger au moins en partie les deux doigts lorsque ces derniers sont en position déployée.

Selon un aspect d'au moins un mode de réalisation de l'invention, la station comprend en outre des moyens d'actionnement des premiers moyens de verrouillage aptes à faire passer les premiers moyens de verrouillage mobiles de la position déployée à la position escamotée.

Selon une autre caractéristique particulière d'au moins un mode de réalisation de l'invention, les moyens d'actionnement comprennent un bouton poussoir de déverrouillage s'étendant sur une surface opposée à la surface d'accueil, le bouton poussoir de déverrouillage étant monté pivotant sur ladite station d'accueil et portant un ressort de rappel solidaire de ladite station d'accueil.

Les premiers moyens de verrouillage sont aptes à être déplacés de la position déployée à la position escamotée par pression manuelle sur le bouton poussoir.

Une pression manuelle sur le bouton poussoir à l'encontre du ressort entraîne le pivotement du bouton poussoir et l'escamotage des premiers moyens de verrouillage, ce qui permet la libération du terminal qui peut être désolidarisé de la base.

Selon une caractéristique d'au moins un mode de réalisation, le bouton poussoir de déverrouillage comprend une lumière destinée à coopérer avec un verrou de type Kensington relié à un câble anti-vol.

Selon une caractéristique additionnelle, la paroi frontale s'étend sensiblement perpendiculairement à la surface d'accueil.

Selon un aspect particulier d'au moins un mode de réalisation, lesdits moyens de guidage comprennent au moins une paroi latérale s'étendant depuis un bord latéral de ladite surface d'accueil et prolongeant la paroi frontale.

L'invention concerne également un terminal de paiement électronique positionnable sur une station d'accueil selon l'un des modes de réalisation précités, le terminal étant défini par la revendication 7.

L'invention concerne encore un système de paiement électronique comprenant un terminal de paiement électronique, positionnable sur une station d'accueil selon l'un des modes de réalisation détaillés précédemment, le système étant défini par la revendication 8.

### 5. Liste des Figures

L'invention, ainsi que les différents avantages qu'elle présente, seront plus facilement compris, à la lumière de la description qui va suivre d'un mode de réalisation illustratif et non limitatif de celle-ci, et des dessins annexés parmi lesquels :
- la figure 1 est une vue en perspective de côté d'un système de paiement selon un mode de réalisation de l'invention montrant le terminal de paiement lorsqu'il est monté sur le socle ;
- la figure 2 est une vue en coupe longitudinale du système de paiement de la figure 1 ;
- les figures 3 et 4 sont des vues en perspective, de dessus et de dessous respectivement, du terminal de paiement du système illustré sur les figures 1 et 2 ;
- la figure 5 est une vue en coupe longitudinale de la station d'accueil du système illustré sur les figures 1 et 2 ;
- la figure 6 est une vue en perspective du bouton de déverrouillage porté par la station d'accueil du système illustré sur les figures 1 et 2 , et
- la figure 7 est une vue en perspective de dessus de la station d'accueil du système illustré sur les figures 1 et 2 .

### 6. Description détaillée d'un mode de réalisation de l'invention

Dans la présente description, on utilise les termes d'orientation et de positionnement « frontal », « arrière », « latéral », en se référant arbitrairement à une position normale d'utilisation d'un terminal de paiement et d'une station d'accueil. On utilise en outre les termes « longitudinal » et « transversal » en se référant à des directions respectivement approximativement orthogonales aux faces frontale et arrière de la station d'accueil, et approximativement orthogonales aux faces latérales de la station d'accueil.

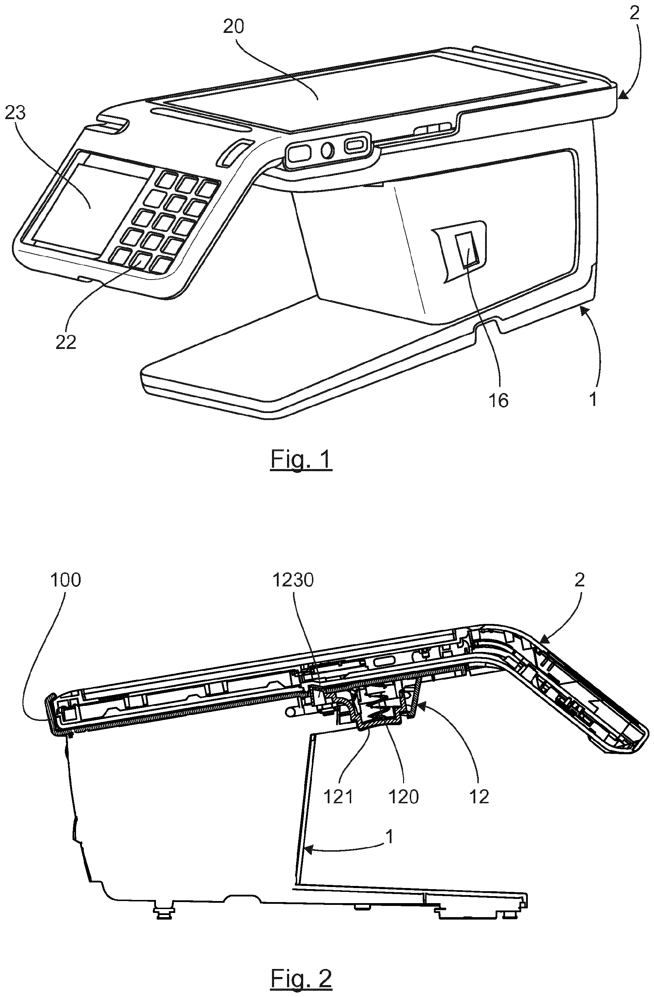

On présente maintenant, en relation avec les figures 1 à 7, un système de paiement électronique comprenant une station d'accueil et un terminal de paiement électronique associé.

Comme illustré notamment sur les figures 1, 2, 3 et 4, le terminal 2 de paiement électronique, qui est positionnable sur une station d'accueil, ou socle, 1, comprend un lecteur de carte magnétique 25A, un lecteur de carte à puce 25B, au moins un écran 20, 23 de visualisation de transactions, un port USB 16 et un clavier de saisie 22.

Le terminal 2 de paiement électronique comprend deux écrans, à savoir un premier écran 20 permettant par exemple à un commerçant de visualiser un état de connexion du terminal 2 sur la station d'accueil 1 ou un état d'avancement d'une transaction, et un deuxième écran 23 permettant à un client de visualiser par exemple le montant d'une transaction ainsi que la saisie d'un code confidentiel propre à sa carte de crédit afin d'effectuer une transaction.

Il est à noter que ces deux écrans 20, 23 peuvent, selon un mode de réalisation de l'invention, être des écrans tactiles.

Ce terminal 2 de paiement électronique est positionnable sur la station d'accueil 1 et est mobile par rapport à la station 1 entre :
- une position de connexion dans laquelle le terminal 2 de paiement est verrouillé sur la station 1, et
- une position détachée dans laquelle le terminal 2 de paiement n'est pas verrouillé sur la station 1.

Pour permettre de positionner un tel terminal 2 de paiement électronique, la station d'accueil 1 comprend une surface d'accueil 10 du terminal 2 de paiement électronique.

Une telle surface d'accueil 10 est, dans cet exemple, sensiblement plane. Cette surface d'accueil 10 comprend un connecteur 14 permettant d'établir une connexion électrique avec le terminal 2 de paiement électronique.

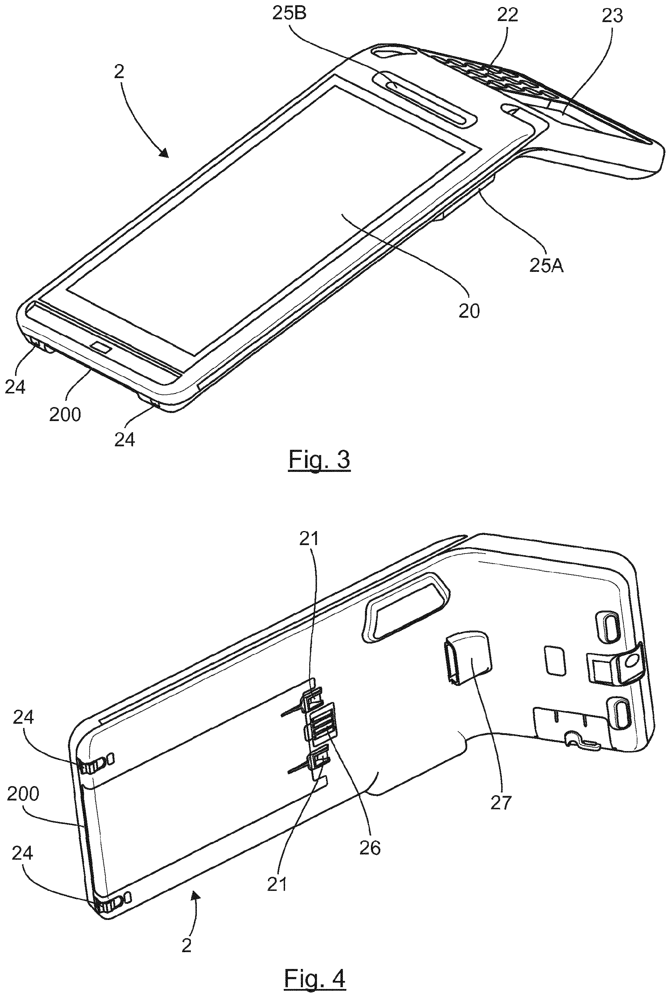

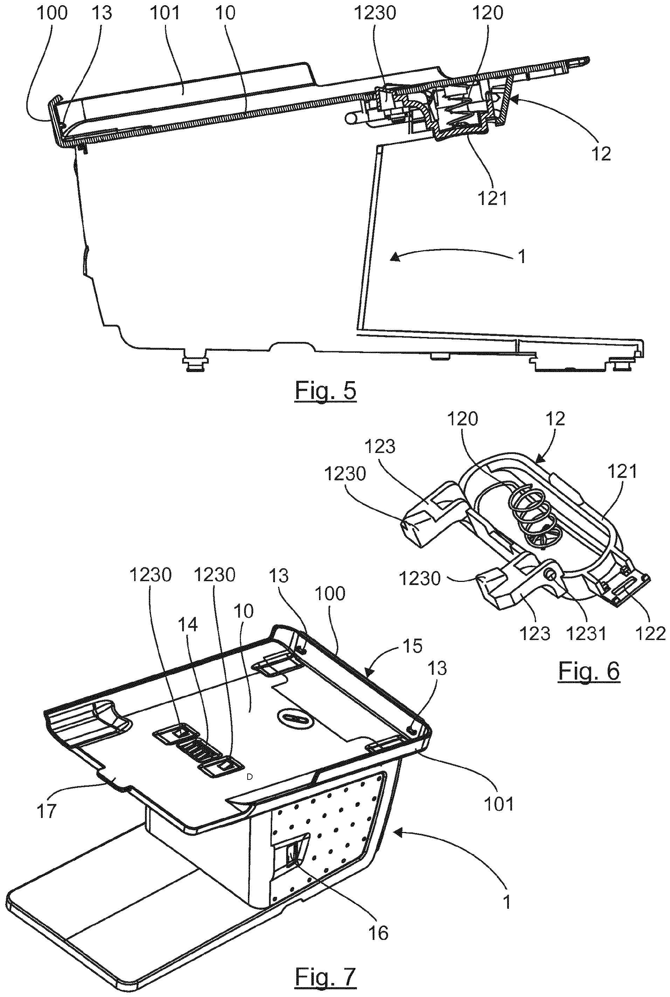

La surface d'accueil 10 est, comme illustré notamment en figures 5 et 7, munie de moyens de guidage du terminal 2 vers une position de connexion du terminal 2 à la station d'accueil 1. Dans cette position de connexion, le terminal 2 de paiement électronique est placé de telle sorte que le connecteur 14 ménagé sur la surface d'accueil 10 est connecté avec des moyens de communication 26 (illustrés sur la figure 4) portés par la surface inférieure du terminal 2 opposée à la surface portant les écrans 20, 23.

Dans ce mode de réalisation, ce connecteur 14 de la station d'accueil 1 combine des broches de chargement électrique ainsi que des broches de transfert de données.

La station d'accueil 1 comprend par ailleurs des moyens de guidage 15 qui comprennent, dans ce mode de réalisation, une paroi frontale 100 s'étendant depuis le bord frontal ou avant de la surface d'accueil 10 et présentant un profil rectiligne recourbé à son extrémité libre et complémentaire du profil de la face frontale 200 du terminal 2. La face frontale 200 du terminal 2 est destinée à venir se positionner contre cette paroi frontale 100.

En d'autres termes, les moyens de guidage 15 de la surface d'accueil 10 présentent un rebord frontal, appelé ici paroi frontale 100, qui s'étend depuis le bord avant, ou bord frontal de la surface d'accueil 10 perpendiculairement à la surface d'accueil 10. Une telle paroi frontale 100 forme une butée de positionnement pour le terminal 2 de paiement électronique et empêche un glissement de celui-ci vers l'avant ou un mauvais positionnement de celui-ci trop en avant de la station d'accueil 1, ce qui aurait pour conséquence une mauvaise connexion électrique entre le terminal 2 et la station d'accueil 1.

Bien évidemment, on pourrait mettre en oeuvre une station d'accueil et un terminal de paiement électronique dont la portion frontale et la face frontale respectives présentent un autre profil que celui illustré.

De sorte à assurer un guidage et un positionnement permettant une connexion électrique satisfaisante, la paroi frontale 100 de la station d'accueil 1 est munie d'au moins un crochet, ou languette, de positionnement, apte à coopérer avec un renfoncement 24 ménagé sur la face frontale 200 du terminal 2.

Ces crochets 13 et renfoncements 24 empêchent en outre un soulèvement du terminal 2 lorsque celui-ci est positionné sur la station d'accueil 1.

A l'opposé de la paroi frontale 100, une languette 17 anti-soulèvement s'étend depuis le bord arrière de la surface d'accueil 10 dans le plan de cette dernière. Cette languette 17 est destinée à coopérer avec un logement 27 ménagé sous le terminal 2.

Dans le mode de réalisation présenté, la paroi frontale 100 est munie de deux crochets 13 espacés coopérant chacune avec un renfoncement 24, les deux renfoncements étant ménagés sur la face frontale 200 du terminal 2.

Ces deux crochets 13 prennent ici la forme de lamelles rectangulaires se positionnant dans les renfoncements 24 de forme complémentaire.

On pourrait toutefois prévoir des crochets présentant d'autres formes.

Les moyens de guidage 15 de la surface d'accueil 10 illustrée comprennent en outre une paroi latérale 101 reliée à la paroi frontale 100 et s'étendant perpendiculairement à la surface d'accueil 10. La mise en oeuvre de cette paroi latérale 101 vise à empêcher le terminal 2 de paiement électronique de se décaler latéralement par rapport à la surface d'accueil 10, et donc à la station d'accueil 1.

On note qu'une paroi latérale opposée à la paroi latérale 101 pourrait être prévue.

Le terminal 2 est positionné sur la station d'accueil 1 en le faisant glisser de l'arrière vers l'avant sur la surface d'accueil 10. Les crochets 13 et la languette empêchent le soulèvement du terminal 2, et des doigts 1230 décrits en détails par la suite assurent un verrouillage anti-recul du terminal 2 sur la station d'accueil 1.

Comme illustré sur les différentes figures, et de sorte à fournir un système de paiement électronique dans lequel la station d'accueil assure un maintien satisfaisant du terminal de paiement sur celle-ci, la station d'accueil 1 comprend en outre des premiers moyens de verrouillage 1230, et aptes à coopérer avec des deuxièmes moyens de verrouillage 21 complémentaires portés par le terminal 2 de paiement, les premiers moyens de verrouillage 1230 étant mobiles entre :
- une position déployée dans laquelle les premiers moyens de verrouillage 1230 font saillie par rapport à la surface d'accueil 10 et sont solidaires ou coopèrent avec les deuxièmes moyens de verrouillage 21 de sorte à ce que le terminal 2 de paiement soit verrouillé sur la station d'accueil 1 ;
- une position escamotée dans laquelle les premiers moyens de verrouillage 1230 sont écartés des deuxièmes moyens de verrouillage 21 de sorte à ce que le terminal 2 de paiement ne soit pas verrouillé sur la station d'accueil 1.

De cette manière, le système de paiement est tel que le terminal 2 est mobile par rapport à la station d'accueil 1 entre :
- une position de connexion dans laquelle les premiers moyens de verrouillage 1230 sont solidaires des deuxièmes moyens de verrouillage 21 de sorte à ce que le terminal 2 de paiement soit verrouillé sur ladite station d'accueil 1,
- une position libre dans laquelle les premiers moyens de verrouillage 1230ne sont pas solidaires des deuxièmes moyens de verrouillage 21 de sorte à ce que le terminal 2 de paiement ne soit pas verrouillé sur la station d'accueil 1.

Comme visible plus particulièrement sur les figures 2 et 5, et de sorte à faire passer les premiers moyens de verrouillage 1230 de la position escamotée à la position déployée, la station d'accueil 1 comprend des moyens d'actionnement de ces premiers moyens de verrouillage 1230.

Ces moyens d'actionnement comprennent un bouton poussoir 12 de déverrouillage s'étendant sur la surface de la station d'accueil 1 opposée à ladite surface d'accueil 10.

Comme illustré notamment en figures 5 et 6, ce bouton poussoir 12 comprend un cache 121 creux de forme oblongue sur lequel est fixé un ressort 120 de rappel.

Le cache 121 porte deux pattes 123 en forme de "L". Chaque patte 123 porte un axe 1231 sur un bord latéral et un doigt 1230 de verrouillage dont la face supérieure est inclinée.

Le cache 121 est monté mobile en pivotement par le biais des axes 1231 sur la station d'accueil 1.

Le terminal 2 étant verrouillé sur la station d'accueil 1, lorsqu'un utilisateur appuie, préférentiellement à l'aide de son index, sur le bouton poussoir 12 et exerce une pression vers le haut, le bouton poussoir 12 pivote autour des axes 1231 ce qui entraîne le passage des deux doigt 1230 de verrouillage de leur position déployée où ils font saillie par rapport à surface d'accueil 10 à leur position escamotée où ils sont logés dans la station d'accueil 1 sans faire saillie par rapport à la surface d'accueil 10.

Ainsi, c'est l'action de l'utilisateur sur le bouton poussoir 12 qui permet de libérer le terminal 2 de paiement électronique de son verrouillage sur la station d'accueil 10. Une fois que l'utilisateur cesse d'appuyer sur le bouton poussoir 12, celui-ci revient en position de repos sous l'action du ressort 120 de rappel.

En position déployée, les premiers moyens de verrouillage de la station d'accueil 10 qui comprennent donc deux doigt 1230 de verrouillage coopèrent avec les deuxièmes moyens de verrouillage 21 du terminal 2 de paiement.

Dans le mode de réalisation illustré, les deuxièmes moyens de verrouillage 21 comprennent deux logements en "U" qui viennent se placer en vis-à-vis des deux pions 1230 lorsque le terminal 2 est positionné sur la station d'accueil 10.

Lorsqu'un utilisateur vient placer le terminal 2 de paiement électronique sur la station d'accueil 10, les doigts 1230 de verrouillage viennent se placer dans les logements 21 du terminal de paiement électronique qui est alors bloqué en translation par rapport à la station d'accueil 10, de l'avant vers l'arrière et latéralement.

Lorsqu'un utilisateur vient placer le terminal 2 sur la station d'accueil 1, un « clic » de verrouillage signale le bon positionnement de ce terminal 2 sur la station d'accueil 1.

Pour retirer le terminal 2 de la station d'accueil 1, l'utilisateur exerce une pression sur le bouton poussoir 12 ce qui escamote les doigts 1230 vers le bas en dehors des logements 21.

On pourrait imaginer d'autres modes de réalisation dans lesquels les premiers moyens de verrouillage présentent plus de deux doigts de sorte, par exemple, à bloquer d'autres mouvements potentiels du terminal de paiement électronique par rapport à la station d'accueil.

On pourrait également imaginer un mode de réalisation dans lequel les doigts sont disposés selon la direction longitudinale de la station d'accueil, les logements du terminal étant disposés en conséquence.

Il est à noter que ces doigts 1230 de verrouillage ont pour fonction d'empêcher le recul du terminal 2 de paiement sur la station d'accueil 1.

Le cache 121 du bouton poussoir 12 présente sur un bord latéral une lumière 122 traversante de forme sensiblement oblongue. Une telle lumière 122 est destinée à coopérer avec un verrou de type Kensington relié à un câble anti-vol de sorte à sécuriser l'installation de la station d'accueil 1.

## Revendications

1. Station d'accueil (1) pour un terminal (2) de paiement électronique comprenant une surface d'accueil (10) dudit terminal (2) de paiement, ladite surface (10) d'accueil étant munie de moyens de guidage (15) dudit terminal (2) vers une position de connexion dudit terminal (2) à ladite station d'accueil (1), ladite station d'accueil (1) comprenant en outre des premiers moyens de verrouillage (1230) aptes à coopérer avec des deuxièmes moyens de verrouillage (21) complémentaires dudit terminal (2) de paiement, ménagés sur la face inférieure du terminal, lesdits premiers moyens de verrouillage (1230) étant mobiles entre :
- une position déployée dans laquelle les premiers moyens de verrouillage (1230) font saillie par rapport à ladite surface (10) d'accueil et coopèrent avec les deuxièmes moyens de verrouillage (21) de sorte à ce que le terminal (2) de paiement soit verrouillé sur ladite station d'accueil (1), et
- une position escamotée dans laquelle les premiers moyens de verrouillage (1230) ne coopèrent pas avec les deuxièmes moyens de verrouillage (21) de sorte à ce que le terminal (2) de paiement ne soit pas verrouillé sur ladite station d'accueil (1) et puisse être détaché de ladite station d'accueil (1),
lesdits moyens de guidage (15) comprenant une paroi frontale (100) s'étendant depuis le bord avant de ladite surface d'accueil (10) et en regard de laquelle est destinée à venir se positionner la face frontale (200) dudit terminal de paiement (2),
ladite station d'accueil (1) étant **caractérisée en ce que** :
- le terminal (2) de paiement électronique comprend, sur la face supérieure du terminal, un premier écran (20) destiné à être visualisé par un commerçant et un deuxième écran (23) destiné à être visualisé par un client, les premier et deuxième écrans correspondant à des côtés respectifs opposés du terminal (2),
- ladite paroi frontale (100) de ladite station d'accueil (1) porte au moins un crochet (13) de positionnement, apte à coopérer avec un renfoncement (24) ménagé sur la face frontale (200) dudit terminal (2) de paiement de sorte à empêcher le soulèvement dudit terminal (2), du côté du terminal correspondant au premier écran (20), dans la position de connexion,
- ladite station d'accueil comprend au moins une languette (17) s'étendant depuis le bord arrière de ladite surface d'accueil (10), ladite au moins une languette (17) étant destinée à coopérer avec un logement (27) ménagé sur la face inférieure du terminal (2) de paiement, de sorte à empêcher le soulèvement dudit terminal (2), du côté du terminal correspondant au deuxième écran (23), dans la position de connexion.

2. Station d'accueil (1) selon la revendication 1, **caractérisée en ce que** les premiers moyens de verrouillage mobiles comprennent deux doigts (1230) et **en ce que** les deuxièmes moyens de verrouillage comprennent deux logements (21) dans lesquels viennent se loger au moins en partie lesdits deux doigts (1230) lorsque ces derniers sont en position déployée.

3. Station d'accueil (1) selon la revendication 1 ou 2, **caractérisée en ce qu'**elle comprend en outre des moyens d'actionnement (12) desdits premiers moyens de verrouillage (1230) aptes à faire passer lesdits premiers moyens de verrouillage (1230) mobiles de ladite position déployée à ladite position escamotée.

4. Station d'accueil (1) selon la revendication 3, **caractérisée en ce que** les moyens d'actionnement comprennent un bouton poussoir (12) de déverrouillage s'étendant sur une surface opposée à ladite surface d'accueil (10), le bouton poussoir (12) de déverrouillage étant monté pivotant sur ladite station d'accueil (1) et portant un ressort de rappel (120) solidaire de ladite station d'accueil (1).

5. Station d'accueil (1) selon la revendication 4, **caractérisée en ce que** le bouton poussoir (12) de déverrouillage comprend une lumière (122) destinée à coopérer avec un verrou de type Kensington relié à un câble anti-vol.

6. Station d'accueil (1) selon l'une quelconque des revendications précédentes, **caractérisée en ce que** lesdits moyens de guidage (15) comprennent au moins une paroi latérale (101) s'étendant depuis un bord latéral de ladite surface d'accueil (10) et prolongeant la paroi frontale (100).

7. Terminal (2) de paiement électronique positionnable sur une station d'accueil (1) selon l'une des revendications 1 à 6, comprenant :
- dans la face frontale (200) du terminal (2), le renfoncement (24) configuré pour coopérer avec le crochet (13) de positionnement de ladite station d'accueil (1),
- les deuxièmes moyens de verrouillage (21) complémentaires, ménagés sur la face inférieure du terminal, aptes à coopérer avec les premiers moyens de verrouillage (1230) ménagés sur la surface d'accueil (10) de ladite station d'accueil (1),
**caractérisé en ce qu'**il comprend :
- sur la face supérieure du terminal, le premier écran (20) destiné à être visualisé par un commerçant et le deuxième écran (23) destiné à être visualisé par un client, les premier et deuxième écrans correspondant à des côtés respectifs opposés du terminal,
- le logement (27) ménagé sur la face inférieure du terminal (2) de paiement et destiné à coopérer avec la languette (17) de ladite station d'accueil.

8. Système de paiement électronique comprenant un terminal de paiement électronique selon la revendication 7, positionnable sur une station d'accueil (1) selon l'une des revendications 1 à 6, le terminal (2) étant mobile par rapport à la station d'accueil (1) entre :
- une position de connexion dans laquelle les premiers moyens de verrouillage (1230) coopèrent avec les deuxièmes moyens de verrouillage (21) de sorte à ce que le terminal (2) de paiement soit verrouillé sur ladite station (1), et
- une position détachée dans laquelle les premiers moyens de verrouillage (1230) ne sont pas solidaires des deuxièmes moyens de verrouillage (21).

## Patentansprüche

1. Andockstation (1) für ein elektronisches Zahlungsterminal (2), umfassend eine Andockoberfläche (10) zum Andocken des Zahlungsterminals (2), wobei die Andockoberfläche (10) versehen ist mit Führungsmitteln (15) zum Führen des Terminals (2) in eine Stellung zur Verbindung des Terminals (2) mit der Andockstation (1), wobei die Andockstation (1) ferner erste Verriegelungsmittel (1230) umfasst, die befähigt sind für das Zusammenwirken mit komplementären zweiten Verriegelungsmitteln (21) des Zahlungsterminals (2), die auf der unteren Fläche des Terminals vorgesehen sind, wobei die ersten Verriegelungsmittel (1230) bewegbar sind zwischen:
- einer ausgezogenen Stellung, in der die ersten Verriegelungsmittel (1230) gegenüber der Andockoberfläche (10) überstehen und mit den zweiten Verriegelungsmitteln (21) zusammenwirken, so dass das Zahlungsterminal (2) auf der Andockstation (1) verriegelt ist, und
- einer eingezogenen Stellung, in der die ersten Verriegelungsmittel (1230) mit den zweiten Verriegelungsmitteln (21) nicht zusammenwirken, so dass das Zahlungsterminal (2) auf der Andockstation (1) nicht verriegelt ist und von der Andockstation (1) gelöst werden kann,
wobei die Führungsmittel (15) eine Stirnwand (100) umfassen, die sich von dem vorderen Rand der Andockoberfläche (10) aus erstreckt, erstreckt, und die Stirnfläche (200) des Zahlungsterminals (2) ist dazu bestimmt, dieser gegenüber positioniert zu werden, wobei die Andockstation (1) **dadurch gekennzeichnet ist, dass**:
das elektronische Zahlungsterminal (2), auf der oberen Fläche des Terminals, einen ersten Bildschirm (20) umfasst, der dazu bestimmt ist, von einem Händler visualisiert zu werden, und einen zweiten Bildschirm (23) umfasst, der dazu bestimmt ist, von einem Kunden visualisiert zu werden, wobei der erste und zweite Bildschirm jeweiligen gegenüberliegenden Seiten des Terminals (2) entsprechen,
wobei die Stirnwand (100) der Andockstation (1) wenigstens einen Positionierhaken (13) trägt, der für das Zusammenwirken mit einer Vertiefung (24) befähigt ist, die auf der Stirnfläche (200) des Zahlungsterminals (2) vorgesehen ist, so dass er das Anheben des Terminals (2), auf der Seite des Terminals, die dem ersten Bildschirm (20) entspricht, in der Verbindungsposition verhindert,
wobei die Andockstation wenigstens eine Zunge (17) umfasst, die sich von dem hinteren Rand der Andockoberfläche (10) aus erstreckt, wobei die wenigstens eine Zunge (17) bestimmt ist für das Zusammenwirken mit einer Aufnahme (27), die auf der unteren Fläche des Zahlungsterminals (2) vorgesehen ist, so dass sie das Anheben des Terminals (2), auf der Seite des Terminals, die dem zweiten Bildschirm (23) entspricht, in der Verbindungsposition verhindert.

2. Andockstation (1) nach Anspruch 1, **dadurch gekennzeichnet, dass** die ersten bewegbaren Verriegelungsmittel zwei Finger (1230) umfassen, und dadurch, dass die zweiten Verriegelungsmittel zwei Aufnahmen (21) umfassen, in denen die zwei Finger (1230) wenigstens teilweise aufgenommen werden, wenn diese letzten in der ausgezogenen Stellung sind.

3. Andockstation (1) nach Anspruch 1 oder 2, **dadurch gekennzeichnet, dass** sie ferner Betätigungsmittel (12) zum Betätigen der ersten Verriegelungsmittel (1230) umfasst, die dazu befähigt sind, die ersten bewegbaren Verriegelungsmittel (1230) aus der ausgezogenen Stellung in die eingezogene Stellung zu bringen.

4. Andockstation (1) nach Anspruch 3, **dadurch gekennzeichnet, dass** die Betätigungsmittel einen Entriegelungs-Drucktaster (12) umfassen, der sich auf einer Oberfläche erstreckt, die der Andockoberfläche (10) gegenüberliegt, wobei der Entriegelungs-Drucktaster (12) auf der Andockstation (1) drehbar gelagert ist und eine Rückstellfeder (120) trägt, die mit der Andockstation (1) fest verbunden ist.

5. Andockstation (1) nach Anspruch 4, **dadurch gekennzeichnet, dass** der Entriegelungs-Drucktaster (12) einen Schlitz (122) umfasst, der bestimmt ist für das Zusammenwirken mit einem Riegel vom Kensington-Typ, der mit einem Diebstahlschutzkabel verbunden ist.

6. Andockstation (1) nach einem der vorhergehenden Ansprüche, **dadurch gekennzeichnet, dass** die Führungsmittel (15) wenigstens eine seitliche Wand (101) umfassen, die sich von einem seitlichen Rand der Andockoberfläche (10) aus erstreckt und an die Stirnwand (100) anschließt.

7. Elektronisches Zahlungsterminal (2), positionierbar auf einer Andockstation (1) nach einem der Ansprüche 1 bis 6, umfassend:
- in der Frontfläche (200) des Terminals (2), die Vertiefung (24), die für das Zusammenwirken mit dem Positionierhaken (13) der Andockstation (1) ausgelegt ist,
- die komplementären zweiten Verriegelungsmittel (21), die auf der unteren Fläche des Terminals vorgesehen sind und befähigt sind für das Zusammenwirken mit den ersten Verriegelungsmitteln (1230), die auf der Andockoberfläche (10) der Andockstation (1) vorgesehen sind,
**dadurch gekennzeichnet, dass** es umfasst:
- auf der oberen Fläche des Terminals, den ersten Bildschirm (20), der dazu bestimmt ist, von einem Händler visualisiert zu werden, und den zweiten Bildschirm (23), der dazu bestimmt ist, von einem Kunden visualisiert zu werden, wobei der erste und zweite Bildschirm jeweiligen gegenüberliegenden Seiten des Terminals entsprechen,
- die Aufnahme (27), die auf der unteren Fläche des Zahlungsterminals (2) vorgesehen ist und für das Zusammenwirken mit der Zunge (17) der Andockstation bestimmt ist.

8. Elektronisches Zahlungssystem, umfassend ein elektronisches Zahlungsterminal nach Anspruch 7, positionierbar auf einer Andockstation (1) nach einem der Ansprüche 1 bis **6,** wobei das Terminal (2) gegenüber der Andockstation (1) bewegbar ist zwischen:
- einer Verbindungsstellung, in der die ersten Verriegelungsmittel (1230) mit den zweiten Verriegelungsmitteln (21) zusammenzuwirken, so dass das Zahlungsterminal (2) auf der Station (1) verriegelt ist, und
- einer gelösten Stellung, in der die ersten Verriegelungsmittel (1230) mit den zweiten Verriegelungsmitteln (21) nicht fest verbunden sind.

## Claims

1. A docking station (1) for an electronic payment terminal (2) comprising a docking surface (10) for said payment terminal (2), said docking surface (10) being provided with means (15) for guiding said terminal (2) towards a position for connecting said terminal (2) to said docking station (1), said docking station (1) also comprising first locking means (1230) capable of cooperating with complementary second locking means (21) of said payment terminal (2), provided on the lower face of the terminal, said first locking means (1230) being movable between :
- a deployed position in which the first locking means (1230) project with respect to said docking surface (10) and cooperate with the second locking means (21) so that the payment terminal (2) is locked to said docking station (1), and
- a retracted position in which the first locking means (1230) do not cooperate with the second locking means (21) so that the payment terminal (2) is not locked to said docking station (1) and can be detached from said docking station (1),
said guide means (15) comprising a front wall (100) extending from the front edge of said docking surface (10) and opposite which the front face (200) of said payment terminal (2) is intended to be positioned,
said docking station (1) being **characterised in that** :
- the electronic payment terminal (2) comprises, on the upper face of the terminal, a first screen (20) intended to be viewed by a retailer and a second screen (23) intended to be viewed by a customer, the first and second screens corresponding to respective opposite sides of the terminal (2),
- the said front wall (100) of the said docking station (1) carries at least one positioning hook (13), able to cooperate with a recess (24) formed on the front face (200) of the said payment terminal (2) so as to prevent the said terminal (2) from being lifted, on the side of the terminal corresponding to the first screen (20), in the connection position,
- said docking station comprises at least one tab (17) extending from the rear edge of said docking surface (10), said at least one tab (17) being intended to cooperate with a housing (27) provided on the underside of the payment terminal (2), so as to prevent said terminal (2) from being lifted, on the side of the terminal corresponding to the second screen (23), in the connection position.

2. Docking station (1) according to claim 1, **characterised in that** the first movable locking means comprise two fingers (1230) and **in that** the second locking means comprise two housings (21) in which said two fingers (1230) are at least partially housed when the latter are in the deployed position.

3. A docking station (1) as claimed in claim 1 or 2, **characterised in that** it further comprises actuating means (12) for said first locking means (1230) adapted to cause said first locking means (1230) to move from said deployed position to said retracted position.

4. A docking station (1) as claimed in claim 3, **characterised in that** the actuating means comprise an unlocking pushbutton (12) extending on a surface opposite said docking surface (10), the unlocking pushbutton (12) being pivotally mounted on said docking station (1) and carrying a return spring (120) secured to said docking station (1).

5. Docking station (1) as claimed in claim **4, characterised in that** the unlocking push button (12) comprises an aperture (122) intended to cooperate with a Kensington-type lock connected to an anti-theft cable.

6. A docking station (1) according to any one of the preceding claims, **characterised in that** said guide means (15) comprise at least one side wall (101) extending from a side edge of said docking surface (10) and extending the front wall (100).

7. Electronic payment terminal (2) positionable on a docking station (1) according to one of claims 1 to 6, comprising :
- in the front face (200) of the terminal (2), the recess (24) configured to cooperate with the positioning hook (13) of said docking station (1),
- the complementary second locking means (21), provided on the lower face of the terminal, able to cooperate with the first locking means (1230) provided on the docking surface (10) of said docking station (1),
**characterised in that** it comprises :
- on the upper face of the terminal, the first screen (20) intended to be viewed by a retailer and the second screen (23) intended to be viewed by a customer, the first and second screens corresponding to respective opposite sides of the terminal,
- the housing (27) formed on the underside of the payment terminal (2) and intended to cooperate with the tab (17) of said docking station.

8. An electronic payment system comprising an electronic payment terminal as claimed in claim 7, positionable on a docking station (1) as claimed in one of claims 1 to 6, the terminal (2) being movable relative to the docking station (1) between :
- a connected position in which the first locking means (1230) cooperate with the second locking means (21) so that the payment terminal (2) is locked to said station (1), and
- a detached position in which the first locking means (1230) are not integral with the second locking means (21).
